# EUROPÄISCHE PATENTSCHRIFT

(11) **EP 3 947 246 B1**
(45) Veröffentlichungstag und Bekanntmachung des Hinweises auf die Patenterteilung: **12.02.2025**
(21) Anmeldenummer: 20726380.7
(22) Anmeldetag: 14.05.2020
(51) Int. Cl.: B66F 9/075, B66F 9/24

(54) **VERFAHREN ZUR LAGERUNGSUNTERSTÜTZUNG BEI EINEM FLURFÖRDERZEUG UND FLURFÖRDERZEUG**
METHOD FOR WAREHOUSING ASSISTANCE FOR AN INDUSTRIAL TRUCK, AND INDUSTRIAL TRUCK
PROCÉDÉ D'ASSISTANCE AU STOCKAGE DANS UN CHARIOT DE MANUTENTION ET CHARIOT DE MANUTENTION

(30) Priorität: 16.05.2019 DE 102019112954
(43) Veröffentlichungstag der Anmeldung: 09.02.2022
(73) Patentinhaber: Jungheinrich Aktiengesellschaft, 22047 Hamburg (DE)
(72) Erfinder: BISTRY, Hannes, 25421 Pinneberg (DE); ROLINK, Jérôme, 23843 Bad Oldesloe (DE); WETEGROVE, Ralf, 22850 Norderstedt (DE)
(74) Vertreter: Seemann & Partner Patentanwälte mbB
(86) Internationale Anmeldenummer: PCT/EP2020/063450
(87) Internationale Veröffentlichungsnummer: WO 2020/229593

(56) Entgegenhaltungen:
- WO-A1-2018/186790
- WO-A1-2019/066693
- DE-A1- 102017 124 788
- US-A1- 2016 090 283
- US-A1- 2019 176 328
- US-B1- 10 585 440

## Beschreibung

Die Erfindung betrifft ein Verfahren zur Lagerungsunterstützung bei einem Flurförderzeug und ein entsprechendes Flurförderzeug, insbesondere Gabelstapler.

Visualisierungsassistenzsysteme sind bei Fahrzeugen aller Art, auch bei Flurförderzeugen, wie beispielsweise Gabelstaplern, bekannt.

Der Stand der Technik ist hauptsächlich dadurch gekennzeichnet, dass in der zweidimensionalen Bilddarstellung Bereiche markiert werden, wie beispielsweise aus EP 2 653 429 B1 oder EP 2 653 430 B1 bekannt, die die Merkmale des Oberbegriffs des Anspruchs 1 offenbaren, bzw. das Bild durch Textinformationen angereichert wird. Auch existieren Systeme, bei denen die Bewegungen eines Fahrzeugbestandteils anhand von Linien in das Bild eingezeichnet werden, wie beispielsweise bei einer Rückfahrkamera Reifenspuren, die je nach Lenkeinschlag mitbewegt werden. Demgegenüber existieren auch Systeme, bei denen die Visualisierung komplett gerendert erscheint, wie beispielsweise bei der Visualisierung von Hindernissen im Parkpiloten über Abstandsbalken.

Aus US 2016/0090283 A1 ist ein Gabelstapler bekannt, welcher einen Lastenträger und einen nach vorne ausgerichteten optischen Detektor, der mit dem Lastenträger zusammen bewegt wird, aufweist. Eine optische Analyseeinheit analysiert die Bilddaten des optischen Detektors und identifiziert den Lastenträger als erstes dreidimensionales Objekt, erkennt ein zweites dreidimensionales Objekt und ermittelt die dreidimensionale Position des Lastenträgers relativ zu dem zweiten Objekt. Diese relative Positionierung kann verwendet werden, um den Lastenträger entsprechend zu positionieren. Bei manuellem Betrieb können beispielsweise Nachrichten auf einer Anzeigevorrichtung angezeigt werden, wie die Position des Lastenträgers einzustellen ist.

Das Dokument WO 2018/186790 A1 zeigt ein Fahrerassistenzsystem für ein Fahrzeug, das einen Kran zum Laden von Objekten aufweist. Das System umfasst eine Steuereinheit, die ausgebildet ist, ein Präsentationssignal zu generieren, das auf einer Anzeigeeinheit angezeigt wird, sowie eine Objektdetektionsvorrichtung, die Bilder des Fahrzeugs und/oder der Umgebung des Fahrzeugs erfasst und ausgebildet ist, ein Bilddatensignal zu erzeugen, welches der Steuereinheit zugeführt wird. Die Steuereinheit ermittelt eine dreidimensionale Repräsentation wenigstens eines Objekts, das Teil des Fahrzeugs und/oder der Umgebung ist. Die Steuereinheit kann ein dynamisch erzeugtes Augmented Reality (AR)-Bild von wenigstens einem Teil der dreidimensionalen Repräsentation des Objekts bestimmen und Anweisungen in das Präsentationssignal einzufügen, so dass die 3D-Repräsentation das AR-Bild überlagert.

Weiter ist aus DE 10 2007 063 226 A1 ein Verfahren zur Unterstützung bei einem Flurförderzeug bekannt, bei dem auf einem Anzeigesystem die Fahrerperspektive dargestellt wird. Eine Unterstützung erfolgt teilweise auch bei Vorwärtsfahrt, wenn beispielsweise große und sperrige Lasten transportiert werden, die eine direkte Sicht des Fahrers nach vorne verhindern. Das darin gezeigte Kamerasystem hat auch einen Rückwärtsblick für Rangierfahrten und Transportwege, die rückwärts abgefahren werden. Dabei wird der Lenkeinschlag des Flurförderzeugs durch ein Sensormittel erfasst und eine mögliche, durch den Lenkeinschlag bestimmte Fahrspur des Flurförderzeugs in Bezug auf dessen Längsachse durch eine Recheneinheit bestimmt und die Fahrspur auf der Darstellungsvorrichtung vorgestellt.

In der deutschen Patentanmeldung Nr. 10 2017 124 788.2 der Anmelderin ist dieses System dahingehend erweitert worden, dass nicht nur ein den erfassten Lenkeinschlag entsprechender Fahrweg angezeigt wird, sondern außerdem eine Überlagerung einer auf dem Flurförderzeug geförderten Last erfolgt. Der angezeigte Fahrweg berücksichtigt die Dimensionen der beförderten Last.

Ausgehend hiervon liegt der vorliegenden Erfindung die Aufgabe zugrunde, die Unterstützung des Fahrers eines Flurförderzeugs weiter zu verbessern.

Diese der Erfindung zugrunde liegende Aufgabe wird durch ein Verfahren zur Lagerungsunterstützung bei einem Flurförderzeug, insbesondere Gabelstapler, welches eine oder mehrere Kameras, die wenigstens einen Teil der Umgebung des Flurförderzeugs erfasst oder erfassen, und eine Bildverarbeitungsvorrichtung umfasst, die am Fahrerplatz des Flurförderzeugs eine Bedieneingabeschnittstelle und eine Anzeigevorrichtung aufweist, auf welcher von der einen oder den mehreren Kameras erfasste und von der Bildverarbeitungsvorrichtung verarbeitete zwei- oder dreidimensional aufgenommene Bilder angezeigt werden oder werden können, wobei die Kamera oder wenigstens eine der Kameras wenigstens einen Teil eines Lastaufnahmemittels des Flurförderzeugs erfasst, wobei nach einer Anforderung mittels Eingabe an der Bedieneingabeschnittstelle oder automatisch den angezeigten Bildern und/oder einer durch die Anzeigevorrichtung sichtbaren Ansicht wenigstens ein dreidimensionales Objekt überlagert wird, gelöst, das dadurch weitergebildet ist, dass zusätzlich mit Hilfe von Sensoren und einer Auswertealgorithmik dreidimensionale Informationen bezüglich eines ein- oder auszulagernden Objekts oder einer Bewegung des Flurförderzeugs oder seines Lastaufnahmemittels ermittelt werden und das Ergebnis als dreidimensionales Objekt überlagert wird, welches eine Steuerung des Flurförderzeugs und/oder des Lastaufnahmemittels zur Ein- oder Auslagerung des ein- oder auszulagernden Objekts zielführend unterstützt.

Mit der vorliegenden Erfindung wird ein Visualisierungskonzept für Assistenzsysteme zur Ein- und Auslagerung und zur Steuerung von Flurförderzeugen geschaffen, welches den Fahrer aktiv unterstützt.

Die Erfindung beruht auf dem Grundgedanken, dass nicht mehr nur der durch den Lenkeinschlag vorhersehbare Fahrweg des Flurförderzeugs angezeigt wird, so dass der Fahrer beurteilen kann, ob der Fahrweg von Hindernissen frei ist, sondern die Arbeit des Fahrers aktiv unterstützt wird durch eine räumliche Analyse der Umgebung und von relevanten Objekten sowie deren informative Darstellung, die dem Fahrer Informationen liefern, um beispielsweise Ein- oder Auslagerungsvorgänge durchzuführen. Dafür ist das Flurförderzeug mit Sensoren und einer Auswertealgorithmik ausgestattet, mit denen dreidimensionale Informationen ermittelt werden und in Beziehung zum Flurförderzeug und seinen beweglichen Teilen gesetzt werden. Diese Informationen dienen der zielführenden Unterstützung bei der Steuerung des Flurförderzeugs und/oder des Lastaufnahmemittels, insbesondere zur Ein- oder Auslagerung des ein- oder auszulagernden Objekts, aber auch zum Umfahren von Hindernissen und damit zur Kollisionsvermeidung.

In einer Ausführungsform werden zur Berechnung der räumlichen Verhältnisse für die Überlagerung Tiefeninformation verwendet, die von einem oder mehreren Tiefensensoren, insbesondere einer als 3D-Kamera, insbesondere TOF-Kamera ("Time-of-Flight"), ausgebildeten Kamera, erfasst werden. Somit verfügt das Assistenzsystem gemäß dem erfindungsgemäßen Verfahren über eine Kamera oder Sensorik, die sowohl 2D-Bilder als auch 3D-Bilder erzeugen kann. Diese Bilder und Tiefeninformationen können zur Visualisierung beispielsweise in ein sogenanntes Falschfarbbild umgerechnet werden, indem die Entfernung im Farbschema kodiert ist. Die Falschfarben für die Abstandsinformationen können auch halbtransparent über das Bild überlagert werden.

In Ausführungsformen stellt ein zu überlagerndes dreidimensionales Objekt eine Palette, ein Regalelement, ein Hindernis für die Ein- oder Auslagerung, ein Lastaufnahmemittel, einen einzuhaltenden Korridor und/oder eine vorgeschlagene Trajektorie des Lastaufnahmemittels für die Ein- oder Auslagerung und/oder einen Richtungspfeil hierfür dar. Diese Elemente oder das Element werden oder wird dann in das dem Fahrer angezeigte Bild gerendert. Idealerweise wird eine so gerenderte Palette beispielsweise direkt über eine reale Palette im Bild oder in der Ansicht projiziert.

In Ausführungsformen erkennt die Bildverarbeitungsvorrichtung aus Tiefeninformationen zu einem erfassten zweidimensionalen oder dreidimensionalen Bild ein Objekt und erfasst dessen räumliche Erstreckung und Lage, rendert dies als zu überlagerndes Objekt und überlagert es den angezeigten Bildern. Dazu kann vorteilhafterweise eine Datenbank mit möglichen Objekten hinterlegt sein, die die geometrischen Repräsentationen dieser Objekte beinhalten und mit denen die Tiefeninformationen der von der Bildverarbeitungsvorrichtung verarbeiteten Bilder verglichen werden, um entsprechende Objekte zu erkennen. Auch andere Objekterkennungsmethoden sind im Rahmen der vorliegenden Erfindung möglich. Objekterkennung in zwei- oder dreidimensionalen Bildern kann beispielsweise mittels Machine-Learning, insbesondere hierfür trainierten neuronalen Netzen oder herkömmlicheren Methoden erfolgen.

In Ausführungsformen stellt ein zu überlagerndes dreidimensionales Objekt einen vom Fahrer einzuhaltenden Fahrkorridor für das Flurförderzeug, ein Hindernis für das Flurförderzeug und/oder einen Teil des Flurförderzeugs oder das Flurförderzeug und/oder Richtungspfeile hierfür dar. In diesen Fällen bezieht sich das Objekt weniger auf ein ein- oder auszulagerndes Objekt, sondern auf die Bewegung des Flurförderzeugs als Ganzes in Bezug auf seine Umgebung. Richtungspfeile können beispielsweise eine gewünschte Richtung für einen vorgeschlagenen Bewegungsablauf darstellen, oder aber eine momentane Orientierung des Flurförderzeugs oder von Komponenten davon.

In Ausführungsformen werden bei der Überlagerung des wenigstens einen dreidimensionalen Objekts Verzeichnungen der Bildanzeige berücksichtigt. Die entstehenden Verzerrungen sind Eigenschaften des aufnehmenden Kamerasystems und sind bei Kenntnis der Optik des Kamerasystems bekannt. Dies verbessert die maßstabs- und perspektivgetreue Überlagerung der zu überlagernden Objekte oder des zu überlagernden Objekts über das angezeigte Bild, besonders im Randbereich, wo Verzerrungen üblicherweise stärker auftreten als im Zentrum des Bildes.

Vorteilhafterweise wird das Objekt zur Überlagerung, insbesondere halbtransparent, gerendert. Das Objekt sollte dabei möglichst lage-, dimensions- und perspektivgetreu gerendert werden, darf bzw. soll aber als künstlich gerendertes Objekt erkennbar sein, wobei eine halbtransparente Überlagerung den Vorteil hat, dass das reale Objekt bzw. die reale Umgebung unter dem gerenderten Objekt noch deutlich erkennbar ist. Dies erlaubt es dem Fahrer, im Sinne eines Realitätschecks zu beurteilen, wie gut das Assistenzsystem die Lage des Fahrzeugs in Bezug auf die Umgebung erkannt hat und ob beispielsweise Vorschläge für Bewegungsmuster des Lastaufnahmemittels oder des Flurförderzeugs mit der Realität so weit übereinstimmen, dass diese auch durchgeführt werden können.

In einer Ausführungsform wird das zu überlagernde dreidimensionale Objekt in einer Bildsequenz überlagert, die einen vorgeschlagenen Bewegungsablauf des zu überlagernden dreidimensionalen Objekts darstellt, insbesondere eines ein- oder auszulagernden Gegenstands, eines Lastaufnahmemittels des Flurförderzeugs und/oder des Flurförderzeugs selbst. Die Animation durch Generierung und Überlagerung einer Bildsequenz über die angezeigten Bilder ermöglicht es, einen geplanten Bewegungsablauf darzustellen, bevor dieser ausgeführt wird. Auf diese Weise ist es mit einem solchermaßen realisierten Ein- oder Ausstapelassistenten möglich, zu beurteilen, ob beispielsweise ein Ein- oder Auslagerungsvorgang störungsfrei ablaufen kann und dabei die angepeilten Zielpositionen, beispielsweise des Lasthubmittels des Flurförderzeugs, ohne Störungen und genau erreicht werden. Dafür sollte das Flurförderzeug vor einem Regal stehen, die Gabeln des Lastaufnahmemittels sich auf der Höhe der aufzunehmenden Palette befinden. Das System erkennt dann die Palette mit ihrer Position und Rotation im Raum und berechnet eine Trajektorie, wie die Fahr- und Hydraulikfunktionen zur Palettenaufnahme gesteuert werden müssen. Das System kann in diesem Fall die Gabeln des Fahrzeugs rendern, die sich im Ausgangszustand mit den realen Gabeln im Kamerabild überlagern. In der Animation bewegen sich die Gabeln gemäß der Trajektorie in die Last hinein. Analoges gilt für eine vorgeschlagene Fahrtrajektorie des Flurförderzeugs um Hindernisse herum.

Eine solche Bildsequenz wird in Ausführungsformen auf Bedieneranfrage hin wiederholt abgespielt und gegebenenfalls auf Bedienereingabe hin modifiziert, um den geplanten Bewegungsablauf zu optimieren. Sobald der Fahrer mit dem Bewegungsablauf zufrieden ist, wird vorzugsweise auf Bedieneranfrage hin der in der Bildsequenz dargestellte Bewegungsablauf teilautomatisiert durchgeführt. Teilautomatisiert bedeutet in diesem Fall, dass der Bewegungsablauf selbst vom Fahrer angestoßen wird, aber ohne dessen Zutun abläuft, so wie in der Bildsequenz dargestellt. Der Fahrer hat allerdings insbesondere die Möglichkeit, einzugreifen und den Bewegungsablauf zu stoppen, falls eine unvorhergesehene Situation eintritt oder die Sicherheit anderweitig gefährdet ist. Durch diese Maßnahmen ist es dem Fahrer möglich, zu beurteilen, ob das Assistenzsystem die Situation korrekt erkannt hat und die Ausführung der teilautomatisierten Funktion zum gewünschten Ergebnis führen wird. Auch für den Fall, dass das Assistenzsystem nur anzeigt und ohne Fahrzeugeingriff arbeitet, kann dem Fahrer die auszuführende Bewegung mittels der Animation erklärt werden.

Die der Erfindung zugrunde liegende Aufgabe wird auch durch ein Visualisierungsassistenzsystem für ein Flurförderzeug, insbesondere Gabelstapler, gelöst, umfassend eine oder mehrere Kameras, die angeordnet sind, wenigstens einen Teil der Umgebung des Flurförderzeugs zu erfassen, wobei die Kamera oder wenigstens eine der Kameras angeordnet ist, wenigstens einen Teil eines Lastaufnahmemittels des Flurförderzeugs zu erfassen, und mit einer Bildverarbeitungsvorrichtung, die an einem Fahrerplatz des Flurförderzeugs eine Bedieneingabeschnittstelle und eine Anzeigevorrichtung aufweist, die ausgebildet ist, von der einen oder den mehreren Kameras erfasste und von der Bildverarbeitungsvorrichtung verarbeitete Bilder anzuzeigen, wobei die Bildverarbeitungsvorrichtung ausgebildet ist, nach einer Anforderung mittels Eingabe an der Bedieneingabeschnittstelle oder automatisch den angezeigten Bildern wenigstens ein dreidimensionales Objekt zu überlagern, das dadurch weitergebildet ist, dass die Bildverarbeitungsvorrichtung sowie insbesondere zusätzlich eine elektronische Steuervorrichtung des Flurförderzeugs zusätzlich ausgebildet ist oder sind, mit Hilfe von Sensoren und einer Auswertealgorithmik dreidimensionale Informationen bezüglich eines ein- oder auszulagernden Objekts oder einer Bewegung des Flurförderzeugs oder seines Lastaufnahmemittels zu ermitteln und das Ergebnis den angezeigten Bildern und/oder einer durch die Anzeigevorrichtung sichtbaren Ansicht als dreidimensionales Objekt zu überlagern, welches eine Steuerung des Flurförderzeugs und/oder des Lastaufnahmemittels zur Ein- oder Auslagerung des ein- oder auszulagernden Objekts zielführend unterstützt.

Das Visualisierungsassistenzsystem verwirklicht die gleichen Merkmale wie das erfindungsgemäße Verfahren und teilt aufgrund dessen die Merkmale und Vorteile sowie Eigenschaften des Verfahrens.

Die Sensoren sind in Ausführungsformen als Tiefensensoren, insbesondere als TOF-Kamera, ausgebildet. Ebenfalls umfasst sind Systeme, bei denen der bildgebende Sensor unabhängig von dem Sensor zur Umgebungserkennung ausgeführt ist und zu diesem in geeigneter Form kalibriert ist. Beispielsweise kann eine 3D-TOF-Kamera zusätzlich mit einer 2D-Kamera zur Bildanzeige für den Fahrer kombiniert werden. Der Versatz der beiden Systeme ist durch Kalibrierung bekannt und wird beim Rendering der Objekte in das 2D-Bild berücksichtigt.

Ferner umfasst die Anzeigevorrichtung in einer Ausführungsform ein fest eingebautes Display, insbesondere umfassend ein Touchscreen-Display als Bedieneingabeschnittstelle, und/oder ein tragbares AR-Headset. Ein tragbares AR-Headset ("AR" = "Augmented Reality") ist geeignet, dem Fahrer, der das Headset trägt, Informationen anzuzeigen und der Ansicht des Fahrers zu überlagern, einschließlich einer lage- und orientierungsgetreuen Darstellung von überlagerten Objekten. Zur korrekten Anzeige über ein AR-Headset ist noch die Transformation von der Brille zum Referenzkoordinatensystem zu bestimmen, beispielsweise durch Tracking oder Inside-Out-Tracking, und zu berücksichtigen. Ebenfalls kann ein entsprechendes AR-Headset dem Fahrer Bilder einer Rückkamera anzeigen, ohne, dass dieser sich umdrehen muss, oder Bilder anderer Kameras des Flurförderzeugs, die der Sicht des Fahrers halbtransparent überlagert werden können. Dies ist beispielsweise sinnvoll, wenn ein zu visualisierendes Objekt von Bildteilen verdeckt wird, beispielsweise bei aufliegender Last.

Im Falle eines Headsets ist eine eigene, separate Bedieneingabeschnittstelle vorgesehen. Bei einem fest eingebauten Display kann dieses als Touchscreen-Display ausgebildet sein und somit gleichzeitig auch die Funktion der Bedieneingabeschnittstelle erfüllen. Jedoch können Teile der Bedieneingabeschnittstelle auch separat von dem Display vorgesehen sein.

In Ausführungsformen ist oder sind die Bildverarbeitungsvorrichtung sowie insbesondere zusätzlich die elektronische Steuervorrichtung des Flurförderzeugs ausgebildet, die Verfahrensmerkmale eines zuvor beschriebenen erfindungsgemäßen Verfahrens durchzuführen. Eine zusätzliche elektronische Steuervorrichtung separat von der Bildverarbeitungsvorrichtung hat gegebenenfalls die Aufgabe, Steuerimpulse an die beweglichen Teile des Flurförderzeugs zu senden und ist in dieser Funktion ein zentraler Teil des Flurförderzeugs. Die elektronische Steuervorrichtung und die Bildverarbeitungsvorrichtung sind in diesem Fall in Kommunikation miteinander und tauschen Steuersignale aus, so dass beispielsweise die Steuervorrichtung in bestimmten Situationen die Bildverarbeitungsvorrichtung anweisen kann, dem Fahrer bestimmte Informationen anzuzeigen. Ebenfalls stehen die Steuervorrichtung und die Bildverarbeitungsvorrichtung miteinander in Kommunikation, wenn dem Fahrer ein vorgeschlagener Bewegungsablauf als Bildsequenz angezeigt wird und der Fahrer nach der Feststellung, dass der Bewegungsablauf der Realität entspricht, die Anweisung gibt, den Bewegungsablauf durchzuführen. Dieser Bewegungsablauf wird in der Realität dann von der Steuervorrichtung gesteuert.

Die Steuervorrichtung und die Bildverarbeitungsvorrichtung können allerdings auch in einem gemeinsamen elektronischen Zentralcomputer des Flurförderzeugs integriert und als verschiedene Funktionalitäten programmiertechnisch implementiert sein. Ebenso ist es möglich, dass die Anzeigevorrichtung eine Recheneinheit als Bildverarbeitungsvorrichtung integriert hat.

Softwaretechnisch sind die oben beschriebenen Funktionalitäten beispielsweise durch gezielte Kombination von verfügbaren Softwarebibliotheken realisierbar.

Beispielhafte Anwendungen des Verfahrens und des Visualisierungssystems haben die Visualisierung der Auslagerung, die Visualisierung einer Trajektorie zur Einlagerung und die Visualisierung einer "Einflugschneise" bei Anfahrt analog dem Anflugkorridor eines Flugzeugs, wobei dem Nutzer angezeigt wird, wie die ideale Anfahrt aussieht. Weitere Beispiele sind die halbtransparente Einblendung von Ladungsträger und Regalelementen, die Teilung in Form eines Richtungspfeils, der die Fachrichtung anzeigt, welches auch ein Zielfach aus dem Warenmanagementsystem (WMS) berücksichtigen kann, oder die Markierung von Elementen oder Bildpunkten aus der Umgebung, bei denen in Bewegungsrichtung eine Kollision mit Fahrzeugteilen droht.

Ferner wird die der Erfindung zugrunde Aufgabe auch durch ein Flurförderzeug, insbesondere Gabelstapler, mit einem zuvor beschriebenen erfindungsgemäßen Visualisierungsassistenzsystem gelöst, welches somit die gleichen Eigenschaften, Merkmale und Vorteile verwirklicht wie das zuvor beschriebene erfindungsgemäße Visualisierungsassistenzsystem und das vorbeschriebene erfindungsgemäße Verfahren.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung eines Flurförderzeugs,
- Fig. 2: eine schematische Blockdarstellung eines erfindungsgemäßen Visualisierungsassistenzsystems,
- Fig. 3: ein dem Fahrer eines Flurförderzeugs angezeigtes Bild,
- Fig. 4: das Bild mit einer angedeuteten sequenziellen Überlagerung eines dreidimensionalen Objekts bezüglich eines vorgeschlagenen Bewegungsablaufs und
- Fig. 5: eine weitere Darstellung eines dem Fahrer angezeigten Bildes mit überlagerten dreidimensionalen Objekten.

In den Zeichnungen sind jeweils gleiche oder gleichartige Elemente und/oder Teile mit denselben Bezugsziffern versehen, so dass von einer erneuten Vorstellung jeweils abgesehen wird.

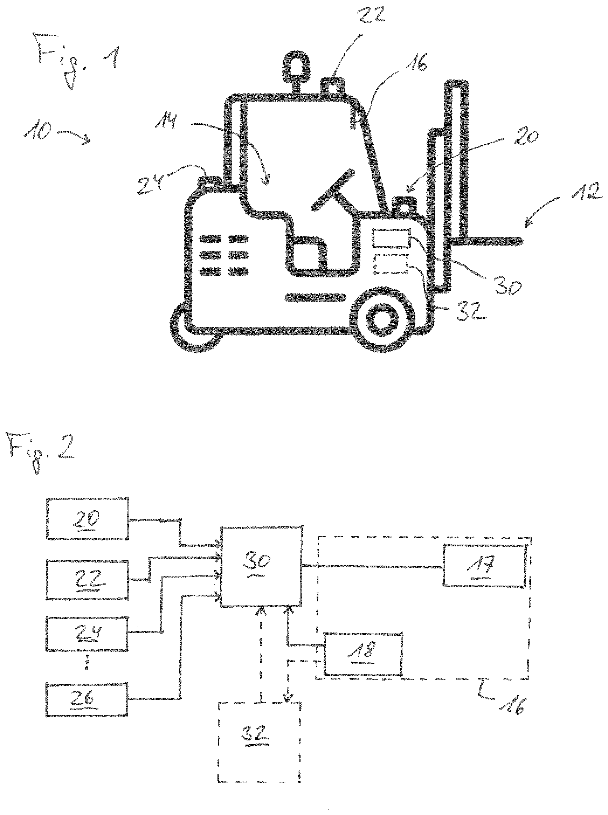

Fig. 1 zeigt ein Flurförderzeug 10 in schematischer Darstellung, welches ein Lastaufnahmemittel 12 an einem Hubgerüst aufweist, sowie eine Fahrerkabine mit einem Fahrerplatz 14, einer Anzeigevorrichtung 16 und mehreren Kameras 20, 22, 24, welche die Umgebung des Flurförderzeugs 10 erfassen, und deren erfasste Bilder auf der Anzeigevorrichtung 16 angezeigt werden können. Die Kamera 20 hat einen Blick in Richtung des Lastaufnahmemittels 12, die Kamera 22 bietet einen Überblick und die Kamera 24 einen Blick rückwärts, der für das Zurücksetzen des Flurförderzeugs 10 hilfreich ist.

Die vorwärts blickende Kamera 20 kann als normale Kamera oder als 3D-Kamera, beispielsweise als oder in Kombination mit einer TOF-Kamera ("TOF" = "Time-of-Flight"), ausgebildet sein, oder es kann ein weiterer Tiefensensor vorhanden sein, der zu den von der Kamera 20 erfassten Bildern zusätzliche Tiefeninformationen erfasst, die mit den erfassten Bildern durch geeignete Kalibration in Beziehung gesetzt werden. Das Flurförderzeug 10 weist ferner eine Bildverarbeitungsvorrichtung 30 auf, die die von den Kameras 20, 22, 24 erfassten Bilder und gegebenenfalls Tiefeninformationen aufnimmt und verarbeitet und die verarbeiteten Bilder auf der Anzeigevorrichtung 16 anzeigen kann. Ferner ist gegebenenfalls eine Steuervorrichtung 32 umfasst, welche Bedieneingaben von dem Fahrer in Steuersignale für das Flurförderzeug 10 oder das Hubgerüst und das Lastaufnahmemittel 12 umsetzen kann, und welches mit der Bildverarbeitungsvorrichtung 30 kommuniziert.

In Fig. 2 ist in einer schematischen Blockdarstellung ein erfindungsgemäßes Visualisierungsassistenzsystem gezeigt, welches die Kameras 20, 22, 24 und gegebenenfalls einen Tiefensensor 26 umfasst, welche ihre aufgenommenen Daten an die Bildverarbeitungsvorrichtung 30 weitergeben, welche diese verarbeitet und auf einem Display 17 der Anzeigevorrichtung 16 anzeigt. Optional erhält die Bildverarbeitungsvorrichtung 30 auch Eingaben von einer Steuervorrichtung 32 des Flurförderzeugs 10, um beispielsweise bestimmte Bewegungsabläufe auf Anforderung zu simulieren und vorzuschlagen oder eine Trajektorie für das Flurförderzeug 10 zu berechnen und vorzuschlagen, ähnlich einem Flugkorridor oder Fahrkorridor. Weiterhin umfasst das Visualisierungsassistenzsystem eine Bedieneingabeschnittstelle 18, die in dem in Fig. 2 gezeigten Beispiel optional ein Teil der Anzeigevorrichtung 16 sein kann. Dafür kann das Display 17 als Touchscreen-Display ausgebildet sein und somit die Funktion der Bedieneingabeschnittstelle 18 mit übernehmen. Weiterhin kann das Display auch separate Bedienelemente, wie Knöpfe, Schalter oder Ähnliches, aufweisen und somit ebenfalls als Bedieneingabeschnittstelle 18 dienen. Die Bedienelemente der Bedieneingabeschnittstelle 18 können allerdings auch getrennt von dem Display 17 vorliegen und somit nicht Teil der Anzeigevorrichtung 16 sein.

Ferner kann die Anzeigevorrichtung 16 auch als AR-Headset ausgebildet sein, durch welches der Fahrer die Umgebung sehen kann, wobei ihm allerdings in dem AR-Headset sowohl zu überlagernde dreidimensionale Objekte angezeigt werden können, in Bezug auf die von ihm sichtbare Umgebung, oder Bilder der Kameras 20, 22, 24, die gegebenenfalls halbtransparent angezeigt werden, die ihrerseits wiederum mit gerenderten dreidimensionalen Objekten überlagert werden können.

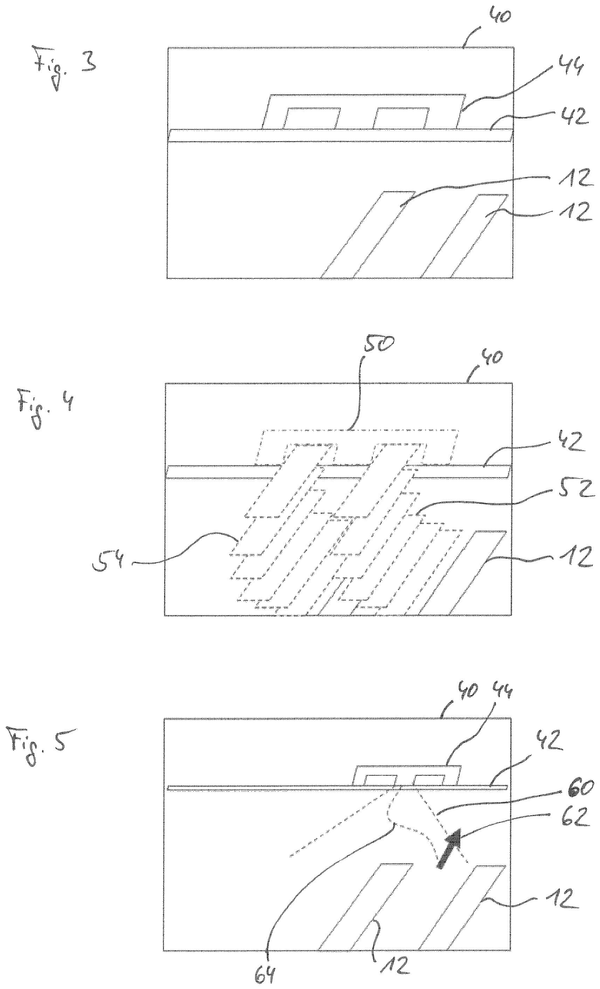

Die Fig. 3 bis 5 zeigen Beispiele dafür, wie die erfindungsgemäße Visualisierungsassistenz durchgeführt werden kann. Fig. 3 zeigt ein Bild 40, das von der vorderen Kamera 20 des Flurförderzeugs 10 aufgenommen wird und eine auf einem Regal 42 abgestellte Palette 44 sowie die Gabelzinken des Lastaufnahmemittels 12 des Flurförderzeugs 10 zeigt. Wenn die Kamera 20 am Flurförderzeug 10 fixiert angebracht ist, werden sich die Gabelzinken des Lastaufnahmemittels 12 bei Bewegung durch den angezeigten Bildausschnitt des Bildes 40 bewegen.

Das Flurförderzeug 10 steht in diesem Fall noch mit einem Versatz zu der aufzunehmenden Palette 44. Aufgabe ist es in diesem Fall, die Gabelzinken des Lastaufnahmemittels 12 so zu bewegen, dass diese sicher und passgenau in die Aufnahmeöffnungen der Palette 44 eingeführt werden können.

Fig. 4 zeigt ein erstes Ausführungsbeispiel des erfindungsgemäßen Verfahrens, bei dem ein vorgeschlagener Bewegungsablauf des Lastaufnahmemittels 12 simuliert und in einer Bildsequenz 52 gerendert und als Sequenz dargestellt wird. Hierfür wird als ein Überlagerungsobjekt 54 eine Darstellung der Gabelzinken des Lastaufnahmemittels 12 gerendert und entsprechend dem vorgeschlagenen Bewegungsablauf nach und nach an verschiedenen Orten dem Bild 40 überlagert, die den gemäß dem vorgeschlagenen Bewegungsablauf vorbestimmten Positionen zu den einzelnen Zeitpunkten der Sequenz entsprechen. Die Sequenz endet damit, dass die Gabelzinken des Lastaufnahmemittels 12 korrekt positioniert sind und durch eine Vorwärtsbewegung des Flurförderzeugs 10 oder des Hubgerüsts selbst, falls es entsprechend ausgestaltet ist, in die Aufnahmeöffnungen der Palette 44 eingeführt werden.

Dabei ist die Palette 44 selbst als Überlagerungsobjekt 50 erkannt worden und wird im Bild 40 an der Stelle der Palette 44 halb- bzw. teiltransparent überlagert. So ist es auch möglich, den Bewegungsablauf darzustellen, bei dem sowohl die Gabelzinken in Form der Überlagerungsobjekte 54 als auch die Palette 44 in Form des Überlagerungsobjekts 50 simuliert und gerendert bewegt werden und dabei von dem Regal 42 abgehoben und ausgelagert werden.

Fig. 5 zeigt ein zweites Ausführungsbeispiel, bei dem ebenfalls die Gabelzinken des Lastaufnahmemittels 12 in die Aufnahmeöffnungen einer Palette 44 eingeführt werden sollen. Hierbei sind die überlagerten Objekte ein Korridor 60, in dem sich der Mittelpunkt zwischen den Enden der beiden Gabelzinkenspitzen bewegen muss, welcher durch einen Richtungspfeil 62 gekennzeichnet ist, der beispielsweise die Ausrichtung der Gabelzinken darstellt oder auch die Richtung aufweist, in die die Gabelzinken ausgerichtet sein müssen, um ideal in die Aufnahmeöffnungen der Palette 44 einzufahren. Diese kann dann von der momentanen Ausrichtung der Gabelzinken abweichen. Gleichzeitig wird eine Trajektorie 64 vorgeschlagen, mit der die Gabelzinken des Lastaufnahmemittels 12 idealerweise bewegt werden, um in eine optimale Einfahrposition für die Palette 44 zu gelangen.

Sowohl in dem Ausführungsbeispiel gemäß Fig. 4 als auch in dem Ausführungsbeispiel der Fig. 5 ist es möglich, dass der Fahrer des Flurförderzeugs 10 dann, wenn er sich vergewissert hat, dass die vorgeschlagene Trajektorie 64 aus Fig. 5 oder der vorgeschlagene Bewegungsablauf der Bildsequenz 52 aus Fig. 4 korrekt ist und zum erwünschten Ergebnis führt, eine teilautomatische Ausführung des entsprechenden vorgeschlagenen Bewegungsablaufs initiieren.

Die Überlagerung des Bildes 40 mit Überlagerungsobjekten 50 erfolgt in Ausführungsformen auf Anforderung des Fahrers durch die Bedieneingabeschnittstelle 18 des Flurförderzeugs 10. Alternativ kann in einem Automatikmodus die entsprechende Führung auch laufend oder kontextabhängig erfolgen.

Um bestimmte Objekte auszuwählen, kann entweder eine automatische Objekterkennung eingeführt werden, beispielsweise anhand von in einer Datenbank hinterlegten bekannten Objekten, oder auf Bedieneingaben des Fahrers hin, der in dem angezeigten Bild beispielsweise ein Objekt markiert, welches eingelagert oder ausgelagert werden soll. Ebenfalls kann der Fahrer in dem angezeigten Bild beispielsweise ein Hindernis markieren, welches es zu umfahren gilt. Die Tiefeninformationen, die aus der Sensorik des Flurförderzeugs 10 bereits vorhanden sind, können dann verwendet werden, um die relative Position des Flurförderzeugs 10 und des Lastaufnahmemittels 12 in Bezug auf das markierte oder automatisch erkannte Objekt zu berechnen und entsprechende Vorschläge für das Umfahren oder das Anfahren des entsprechend markierten oder erkannten Objekts zu berechnen.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 10: Flurförderzeug
- 12: Lastaufnahmemittel
- 14: Fahrerplatz
- 16: Anzeigevorrichtung
- 17: Display
- 18: Bedieneingabeschnittstelle
- 20: 3D-Kamera
- 22: Kamera
- 24: Kamera
- 26: Tiefensensor
- 30: Bildverarbeitungsvorrichtung
- 32: Steuervorrichtung
- 40: Bild
- 42: Regal
- 44: Palette
- 50: Überlagerungsobjekt
- 52: Sequenz
- 54: Überlagerungsobjekt
- 60: Korridor
- 62: Richtungspfeil
- 64: vorgeschlagene Trajektorie

## Patentansprüche

1. Verfahren zur Lagerungsunterstützung bei einem Flurförderzeug (10), insbesondere Gabelstapler, welches eine oder mehrere Kameras (20, 22, 24), die wenigstens einen Teil der Umgebung des Flurförderzeugs (10) erfasst oder erfassen, und eine Bildverarbeitungsvorrichtung (30) umfasst, die am Fahrerplatz (14) des Flurförderzeugs (10) eine Bedieneingabeschnittstelle (18) und eine Anzeigevorrichtung (16) aufweist, auf welcher von der einen oder den mehreren Kameras (20, 22, 24) erfasste und von der Bildverarbeitungsvorrichtung (30) verarbeitete zwei- oder dreidimensional aufgenommene Bilder (40) angezeigt werden oder werden können, wobei die Kamera (20) oder wenigstens eine der Kameras (20, 22, 24) wenigstens einen Teil eines Lastaufnahmemittels (12) des Flurförderzeugs (10), erfasst, wobei nach einer Anforderung mittels Eingabe an der Bedieneingabeschnittstelle (18) oder automatisch den angezeigten Bildern (40) und/oder einer durch die Anzeigevorrichtung (16) sichtbaren Ansicht wenigstens ein dreidimensionales Objekt überlagert wird, **dadurch gekennzeichnet, dass** zusätzlich mit Hilfe von Sensoren und einer Auswertealgorithmik dreidimensionale Informationen bezüglich eines ein- oder auszulagernden Objekts (44) oder einer Bewegung des Flurförderzeugs (10) oder seines Lastaufnahmemittels (12) ermittelt werden und das Ergebnis als dreidimensionales Objekt (50, 52, 54, 60, 62, 64) überlagert wird, welches eine Steuerung des Flurförderzeugs (10) und/oder des Lastaufnahmemittels (12) zur Ein- oder Auslagerung des ein- oder auszulagernden Objekts (44) zielführend unterstützt.

2. Verfahren nach Anspruch 1, **dadurch gekennzeichnet, dass** zur Berechnung der räumlichen Verhältnisse für die Überlagerung Tiefeninformation verwendet werden, die von einem oder mehreren Tiefensensoren, insbesondere einer als 3D-Kamera, insbesondere TOF-Kamera, ausgebildeten Kamera (20), erfasst werden.

3. Verfahren nach Anspruch 1 oder 2, **dadurch gekennzeichnet, dass** ein zu überlagerndes dreidimensionales Objekt (50, 54, 60, 62, 64) eine Palette (44), ein Regalelement (42), ein Hindernis für die Ein- oder Auslagerung, ein Lastaufnahmemittel (12), einen einzuhaltenden Korridor (60) und/oder eine vorgeschlagene Trajektorie (64) des Lastaufnahmemittels (12) für die Ein- oder Auslagerung und/oder einen Richtungspfeil (62) hierfür darstellt.

4. Verfahren nach Anspruch 3, **dadurch gekennzeichnet, dass** die Bildverarbeitungsvorrichtung (30) aus Tiefeninformationen zu einem erfassten zweidimensionalen oder dreidimensionalen Bild (40) ein Objekt (12, 42, 44) erkennt und dessen räumliche Erstreckung und Lage erfasst, als zu überlagerndes Objekt (50, 54) rendert und den angezeigten Bildern (40) überlagert.

5. Verfahren nach einem der Ansprüche 1 bis 4, **dadurch gekennzeichnet, dass** ein zu überlagerndes dreidimensionales Objekt einen vom Fahrer einzuhaltenden Fahrkorridor für das Flurförderzeug (10), ein Hindernis für das Flurförderzeug (10) und/oder einen Teil des Flurförderzeugs (10) oder das Flurförderzeug (10) und/oder Richtungspfeile hierfür darstellt.

6. Verfahren nach einem der Ansprüche 1 bis 5, **dadurch gekennzeichnet, dass** bei der Überlagerung des wenigstens einen dreidimensionalen Objekts (50, 52, 60, 62, 64) Verzeichnungen der Bildanzeige berücksichtigt werden.

7. Verfahren nach einem der Ansprüche 1 bis 6, **dadurch gekennzeichnet, dass** das Objekt (50, 52, 60, 62, 64) zur Überlagerung, insbesondere halbtransparent, gerendert wird.

8. Verfahren nach einem der Ansprüche 1 bis 7, **dadurch gekennzeichnet, dass** das zu überlagernde dreidimensionale Objekt (54) in einer Bildsequenz (52) überlagert wird, die einen vorgeschlagenen Bewegungsablauf des zu überlagernden dreidimensionalen Objekts (54) darstellt, insbesondere eines ein- oder auszulagernden Gegenstands (44), eines Lastaufnahmemittels (12) des Flurförderzeugs (10) und/oder des Flurförderzeugs (10) selbst.

9. Verfahren nach Anspruch 8, **dadurch gekennzeichnet, dass** die Bildsequenz (52) auf Bedieneranfrage hin wiederholt abgespielt wird.

10. Verfahren nach Anspruch 8 oder 9, **dadurch gekennzeichnet, dass** auf Bedieneranfrage hin der in der Bildsequenz (52) dargestellte Bewegungsablauf teilautomatisiert durchgeführt wird.

11. Visualisierungsassistenzsystem für ein Flurförderzeug (10), insbesondere Gabelstapler, umfassend eine oder mehrere Kameras (20, 22, 24), die angeordnet sind, wenigstens einen Teil der Umgebung des Flurförderzeugs (10) zu erfassen, wobei die Kamera (20) oder wenigstens eine der Kameras (20, 22, 24) angeordnet ist, wenigstens einen Teil eines Lastaufnahmemittels (12) des Flurförderzeugs (10) zu erfassen, und mit einer Bildverarbeitungsvorrichtung (30), die an einem Fahrerplatz (14) des Flurförderzeugs (10) eine Bedieneingabeschnittstelle (18) und eine Anzeigevorrichtung (16) aufweist, die ausgebildet ist, von der einen oder den mehreren Kameras (20, 22, 24) erfasste und von der Bildverarbeitungsvorrichtung (30) verarbeitete Bilder (40) anzuzeigen, wobei die Bildverarbeitungsvorrichtung (30) ausgebildet ist, nach einer Anforderung mittels Eingabe an der Bedieneingabeschnittstelle (18) oder automatisch den angezeigten Bildern wenigstens ein dreidimensionales Objekt zu überlagern, **dadurch gekennzeichnet, dass** die Bildverarbeitungsvorrichtung (30) sowie insbesondere zusätzlich eine elektronische Steuervorrichtung (32) des Flurförderzeugs (10) zusätzlich ausgebildet ist oder sind, mit Hilfe von Sensoren und einer Auswertealgorithmik dreidimensionale Informationen bezüglich eines ein- oder auszulagernden Objekts oder einer Bewegung des Flurförderzeugs (10) oder seines Lastaufnahmemittels (12) zu ermitteln und das Ergebnis den angezeigten Bildern und/oder einer durch die Anzeigevorrichtung sichtbaren Ansicht als dreidimensionales Objekt zu überlagern, welches eine Steuerung des Flurförderzeugs (10) und/oder des Lastaufnahmemittels (12) zur Ein- oder Auslagerung des ein- oder auszulagernden Objekts zielführend unterstützt.

12. Visualisierungsassistenzsystem nach Anspruch 11, **dadurch gekennzeichnet, dass** die Sensoren als Tiefensensoren, insbesondere als TOF-Kamera (20), ausgebildet sind.

13. Visualisierungsassistenzsystem nach Anspruch 11 oder 12, **dadurch gekennzeichnet, dass** die Anzeigevorrichtung (16) ein fest eingebautes Display (17), insbesondere umfassend ein Touchscreen-Display als Bedieneingabeschnittstelle (18), und/oder ein tragbares AR-Headset umfasst.

14. Visualisierungsassistenzsystem nach einem der Ansprüche 11 bis 13, **dadurch gekennzeichnet, dass** die Bildverarbeitungsvorrichtung sowie insbesondere zusätzlich die elektronische Steuervorrichtung (32) des Flurförderzeugs (10) ausgebildet ist oder sind, die Verfahrensmerkmale eines der Ansprüche 2 bis 9 durchzuführen.

15. Flurförderzeug (10), insbesondere Gabelstapler, mit einem Visualisierungsassistenzsystem nach einem der Ansprüche 11 bis 14.

## Claims

1. A method for warehousing assistance for an industrial truck (10), in particular a forklift, which comprises one or more cameras (20, 22, 24), which capture(s) at least a part of the surroundings of the industrial truck (10), and an image processing device (30), which has, at the driver's seat (14) of the industrial truck (10), an operating input interface (18) and a display device (16), on which two- or three-dimensionally recorded images (40) captured by the one or more cameras (20, 22, 24) and processed by the image processing device (30) are displayed or can be displayed, wherein the camera (20) or at least one of the cameras (20, 22, 24) captures at least a part of the load handling means (12) of the industrial truck (10), wherein at least one three-dimensional object is superimposed over the displayed images (40) and/or a view visible on the display device (16) after a request by means of an input at the operating input interface (18) or automatically, **characterized in that** three-dimensional information regarding an object (44) to be stored or retrieved or regarding a movement of the industrial truck (10) or its load handling means (12) is additionally determined with the aid of sensors and an evaluation algorithm, and the result is superimposed as a three-dimensional object (50, 52, 54, 60, 62, 64), which assists a control of the industrial truck (10) and/or of the load handling means (12) in storing or retrieving an object (44) to be stored or retrieved in a targeted manner.

2. The method according to claim 1, **characterized in that** depth information captured by one or more depth sensors, in particular a camera (20) designed as a 3D camera, in particular a TOF camera, is used to calculate the spatial conditions for the superimposition.

3. The method according to claim 1 or 2, **characterized in that** a three-dimensional object (50, 54, 60, 62, 64) to be superimposed is a pallet (44), a rack element (42), an obstacle for storage or retrieval, a load handling means (12), a corridor (60) to be maintained, and/or a proposed trajectory (64) of the load handling means (12) for storage or retrieval and/or a directional arrow (62) for this purpose.

4. The method according to claim 3, **characterized in that** the image processing device (30) recognizes an object (12, 42, 44) from depth information regarding a captured two-dimensional or three-dimensional image (40) and captures its spatial extent and position, renders it as an object (50, 54) to be superimposed, and superimposes it over the displayed images (40).

5. The method according to one of claims 1 to 4, **characterized in that** a three-dimensional object to be superimposed is a driving corridor for the industrial truck (10) to be maintained by the driver, an obstacle for the industrial truck (10) and/or a part of the industrial truck (10), or the industrial truck (10) and/or directional arrows for this purpose.

6. The method according to one of claims 1 to 5, **characterized in that** distortions of the displayed image are taken into account when superimposing the at least one three-dimensional object (50, 52, 60, 62, 64).

7. The method according to one of claims 1 to 6, **characterized in that** the object (50, 52, 60, 62, 64) is rendered for superimposition, in particular to be semitransparent.

8. The method according to one of claims 1 to 7, **characterized in that** the three-dimensional object (54) to be superimposed is superimposed in an image sequence (52) that shows a proposed movement progression of the three-dimensional object (54) to be superimposed, in particular an item (44) to be stored or retrieved, a load handling means (12) of the industrial truck (10), and/or the industrial truck (10) itself.

9. The method according to claim 8, **characterized in that** the image sequence (52) is repeated at the request of the user.

10. The method according to claim 8 or 9, **characterized in that** the movement progression shown in the image sequence (52) is performed in a semi-automated manner at the request of the user.

11. A visualization assistance system for an industrial truck (10), in particular a forklift, comprising one or more cameras (20, 22, 24), which are arranged to capture at least a part of the surroundings of the industrial truck (10), wherein the camera (20) or at least one of the cameras (20, 22, 24) is arranged to capture at least a part of a load handling means (12) of the industrial truck (10), and comprising an image processing device (30), which, at a driver's seat (14) of the industrial truck (10), has an operating input interface (18) and a display device (16), which is designed to display images (40) captured by the one or more cameras (20, 22, 24) and processed by the image processing device (30), wherein the image processing device (30) is designed to superimpose at least one three-dimensional object over the displayed images after a request by means of an input at the operating input interface (18) or automatically, **characterized in that** the image processing device (30) and in particular additionally an electronic control device (32) of the industrial truck (10) is or are additionally designed to determine three-dimensional information regarding an object to be stored or retrieved or a movement of the industrial truck (10) or its load handling means (12) with the aid of sensors and an evaluation algorithm and to superimpose the result as a three-dimensional object over the displayed images and/or a view visible on the display device, which assists a control of the industrial truck (10) and/or of the load handling means (12) in storing or retrieving the object to be stored or retrieved in a targeted manner.

12. The visualization assistance system according to claim 11, **characterized in that** the sensors are designed as depth sensors, in particular as a TOF camera (20).

13. The visualization assistance system according to claim 11 or 12, **characterized in that** the display device (16) comprises a permanently installed display (17), in particular comprising a touchscreen display as an operating input interface (18), and/or a wearable AR headset.

14. The visualization assistance system according to one of claims 11 to 13, **characterized in that** the image processing device and in particular additionally the electronic control device (32) of the industrial truck (10) is or are designed to perform the method features of one of claims 2 to 9.

15. An industrial truck (10), in particular a forklift, comprising a visualization assistance system according to one of claims 11 to 14.

## Revendications

1. Procédé d'assistance au stockage pour un chariot de manutention (10), en particulier un chariot élévateur, qui comprend une ou plusieurs caméras (20, 22, 24) qui enregistrent au moins une partie de l'environnement du chariot de manutention (10), et un dispositif (30) de traitement d'images, qui comprend, au niveau du poste de conduite (14) du chariot de manutention (10), une interface (18) d'entrée de commande et un dispositif d'affichage (16), sur lequel des images (40) capturées en deux ou trois dimensions par une ou plusieurs caméras (20, 22, 24) et traitées par le dispositif (30) de traitement d'images, sont affichées ou aptes à être affichées, la caméra (20) ou au moins une des caméras (20, 22, 24) détectant au moins une partie d'un moyen (12) de réception de charge du chariot de manutention (10), au moins un objet tridimensionnel étant superposé aux images affichées (40) et/ou à une vue visible au moyen du dispositif d'affichage (16), à la suite d'une demande faite au moyen d'une entrée sur l'interface (18) d'entrée de commande, ou automatiquement, **caractérisé en outre par le fait que**, à l'aide de capteurs et d'un algorithme d'évaluation, des informations tridimensionnelles concernant un objet (44) à stocker ou à déstocker ou un mouvement du chariot de manutention (10) ou de son moyen (12) de réception de charge sont déterminées, et en ce que le résultat est superposé sous forme d'objet tridimensionnel (50, 52, 54, 60, 62, 64), lequel assiste de manière ciblée une commande du chariot de manutention (10) et/ou du moyen (12) de réception de charge pour le stockage ou le déstockage de l'objet (44) à stocker ou à déstocker.

2. Procédé selon la revendication 1, **caractérisé en ce que**, pour le calcul des rapports spatiaux pour la superposition, des informations de profondeur sont utilisées, qui sont enregistrées par un ou plusieurs capteurs de profondeur, notamment une caméra (20) conçue sous la forme d'une caméra 3D, en particulier une caméra TOF.

3. Procédé selon la revendication 1 ou la revendication 2, **caractérisé en ce qu'**un objet tridimensionnel (50, 54, 60, 62, 64) à superposer représente une palette (44), un élément de rayonnage (42), un obstacle pour le stockage ou le déstockage, un moyen (12) de réception de charge, un corridor (60) à respecter et/ou une trajectoire (64) proposée du moyen (12) de réception de charge pour le stockage ou le déstockage et/ou une flèche de direction (62) à cet effet.

4. Procédé selon la revendication 3, **caractérisé en ce que** le dispositif (30) de traitement d'images reconnaît un objet (12, 42, 44) à partir d'informations de profondeur relatives à une image bidimensionnelle ou tridimensionnelle (40) enregistrée, et enregistre son extension spatiale et sa position, l'édite sous forme d'objet (50, 54) à superposer et le superpose aux images (40) affichées.

5. Procédé selon l'une des revendications 1 à 4, **caractérisé en ce qu'**un objet tridimensionnel à superposer représente un couloir de circulation à respecter par le conducteur pour le chariot de manutention (10), un obstacle pour le chariot de manutention (10) et/ou une partie du chariot de manutention (10) ou le chariot de manutention (10) et/ou des flèches directionnelles pour celui-ci.

6. Procédé selon l'une des revendications 1 à 5, **caractérisé en ce que**, lors de la superposition d'au moins un objet tridimensionnel (50, 52, 60, 62, 64), il est tenu compte des distorsions de l'affichage de l'image.

7. Procédé selon l'une des revendications 1 à 6, **caractérisé en ce que** l'objet (50, 52, 60, 62, 64) est édité pour la superposition, en particulier de manière semi-transparente.

8. Procédé selon l'une des revendications 1 à 7, **caractérisé en ce que** l'objet tridimensionnel (54) à superposer est superposé dans une séquence d'images (52) représentant une proposition de déplacement de l'objet tridimensionnel (54) à superposer, notamment un objet (44) à stocker ou à déstocker, un moyen (12) de réception de charge du chariot de manutention (10) et/ou le chariot de manutention (10) lui-même.

9. Procédé selon la revendication 8, **caractérisé en ce que** la séquence d'images (52) est rejouée à la demande de l'opérateur.

10. Procédé selon la revendication 8 ou la revendication 9, **caractérisé en ce que**, sur demande de l'opérateur, le déroulement du mouvement représenté dans la séquence d'images (52) est effectué de manière partiellement automatisée.

11. Système d'assistance à la visualisation pour un chariot de manutention (10), en particulier un chariot élévateur, comprenant une ou plusieurs caméras (20, 22, 24) qui sont agencées pour enregistrer au moins une partie de l'environnement du chariot de manutention (10), la caméra (20) ou au moins une des caméras (20, 22, 24) étant agencée de façon à détecter au moins une partie d'un moyen (12) de réception de charge du chariot de manutention (10), et comprenant un dispositif (30) de traitement d'images qui comprend, au niveau d'un poste de conduite (14) du chariot de manutention (10), une interface (18) d'entrée de commande et un dispositif d'affichage (16) qui est conçu pour afficher des images (40) capturées par une caméra ou par les plusieurs caméras (20, 22, 24) et traitées par le dispositif (30) de traitement d'images, le dispositif (30) de traitement d'images étant conçu de façon à superposer au moins un objet tridimensionnel aux images affichées, à la suite d'une demande faite au moyen d'une entrée sur l'interface (18) d'entrée de commande, ou automatiquement, **caractérisé en ce que** le dispositif (30) de traitement d'images ainsi que, notamment en supplément un dispositif de commande électronique (32) du chariot de manutention (10), est ou sont conçus en outre pour déterminer, à l'aide de capteurs et d'un algorithme d'évaluation, des informations tridimensionnelles concernant un objet à stocker ou à déstocker ou un mouvement du chariot de manutention (10) ou de son moyen (12) de réception de charge, et pour superposer le résultat aux images affichées et/ou à une vue visible par le dispositif d'affichage sous la forme d'un objet tridimensionnel, lequel assiste de manière ciblée une commande du chariot de manutention (10) et/ou du moyen (12) de réception de charge pour le stockage ou le déstockage de l'objet à stocker ou à déstocker.

12. Système d'assistance à la visualisation selon la revendication 11, **caractérisé en ce que** les capteurs sont sous forme de capteurs de profondeur, en particulier de caméras TOF (20).

13. Système d'assistance à la visualisation selon la revendication 11 ou la revendication 12, **caractérisé en ce que** le dispositif d'affichage (16) comprend un écran fixe (17), comprenant notamment un écran tactile en tant qu'interface (18) d'entrée de commande, et/ou un casque de RA portable.

14. Système d'assistance à la visualisation selon l'une des revendications 11 à 13, **caractérisé en ce que** le dispositif de traitement d'images ainsi que notamment en outre le dispositif électronique de commande (32) du chariot de manutention (10) est ou sont configurés pour mettre en oeuvre les caractéristiques du procédé de l'une des revendications 2 à 9.

15. Chariot de manutention (10), notamment chariot élévateur, comportant un système d'assistance à la visualisation selon l'une des revendications 11 à 14.
